(19) Europäisches Patentamt / European Patent Office / Office européen des brevets

(11) EP 4 509 200 A1

(12) EUROPEAN PATENT APPLICATION
published in accordance with Art. 153(4) EPC

(43) Date of publication:
**19.02.2025 Bulletin 2025/08**

(21) Application number: **23788643.7**

(22) Date of filing: **14.04.2023**

(51) International Patent Classification (IPC):
***B01D 39/14*** *(2006.01)* ***B01D 39/20*** *(2006.01)*
***B01D 39/16*** *(2006.01)* ***B01D 39/08*** *(2006.01)*

(52) Cooperative Patent Classification (CPC):
**B01D 39/08; B01D 39/14; B01D 39/16; B01D 39/20**

(86) International application number:
**PCT/KR2023/005086**

(87) International publication number:
**WO 2023/200294 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.04.2022 KR 20220046563**

(71) Applicant: **LG Electronics Inc.**
**Yeongdeungpo-gu**
**Seoul 07336 (KR)**

(72) Inventors:
- **PARK, Jeong Yong**
**Seoul 08592 (KR)**
- **KIM, Young Seok**
**Seoul 08592 (KR)**

(74) Representative: **Vossius & Partner Patentanwälte Rechtsanwälte mbB**
**Siebertstrasse 3**
**81675 München (DE)**

(54) **RESIN COMPOSITION FOR ANTIBACTERIAL FILTER, METHOD FOR PREPARING SAME, AND ANTIBACTERIAL FILTER USING SAME**

(57) The present invention relates to a resin composition for an antibacterial filter to improve air hygiene problems by suppressing the propagation of bacteria in a filter applied to home appliances such as an air conditioner, a humidifier, or an air purifier. Particularly, the resin composition for an antibacterial filter, according to the present invention, comprises an antibacterial glass composition and a resin for a filter, and in particular, by controlling the component and amount of the antimicrobial glass composition, the antibacterial activity is improved, and the physical properties of the resin are improved.

FIG. 1.

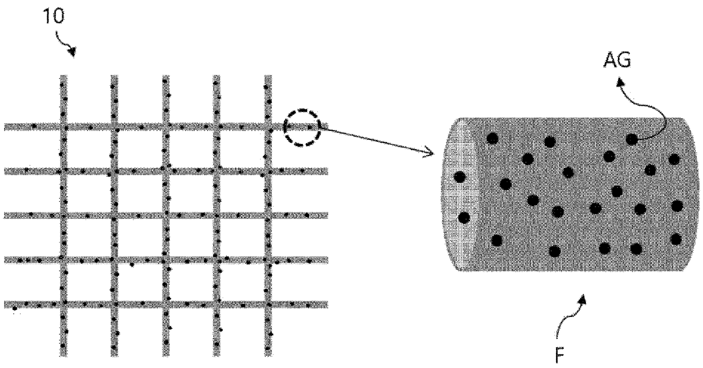




Processed by Luminess, 75001 PARIS (FR)

## Description

### FIELD

The present disclosure relates to a resin composition for an antibacterial filter, a method for preparing the same, and an antibacterial filter using the resin composition.

### DESCRIPTION OF RELATED ART

Microorganisms such as germs, fungi, and bacteria are ubiquitous in our living spaces such as washbasins, refrigerator shelves, washing machines, air conditioners, humidifiers, and air purifiers. When microorganisms enter a human body, they may cause life-threatening infections.

In particular, home appliances such as air conditioners, humidifiers, and air purifiers may spread microorganisms harmful to the human body in closed spaces.

Recently, a technology for applying an antibacterial agent to a filter used in the air conditioner or the humidifier has been attempted.

The filter is manufactured using a yarn made of a resin component. A process of manufacturing the filter yarn involves melting the resin, spinning the melt resin , and then performing a drawing process thereon. Accordingly, a long and thin yarn is manufactured. In this regard, a good elongation of the yarn should be secured so that there are no problems in the drawing process. However, the antibacterial agent causes a chemical reaction with the resin, thereby damaging a polymer chain. Accordingly, the antibacterial agent causes a problem of reducing the elongation of the resin. When the elongation of the yarn is reduced, the yarn breaks frequently during the process of manufacturing the yarn. Accordingly, a yield of the yarn production is reduced. Therefore, in order to provide the filter using the antibacterial agent, it is necessary to improve the process or change ingredients or a content of the antibacterial agent.

In addition, silver (Ag) is widely used as a material of the antibacterial agent. According to the release safety criteria of the standard specification and inspection agency designation notice, a release amount of silver is defined to be 10ppb (0.01mg/L) or smaller. However, the conventional technology has a problem that a large amount of silver is released, which may cause harm to the human body and the ecosystem.

### DISCLOSURE

### TECHNICAL PURPOSES

A purpose of the present disclosure is to provide a resin composition for an antibacterial filter that suppresses growth of bacteria in a filter applied to home appliances such as air conditioners, humidifiers, or air purifiers, thereby improving the hygiene of air.

In addition, a purpose of the present disclosure is to provide a method for preparing a resin composition for an antibacterial filter that is harmless to the human body and exhibits antibacterial performance by simply adding an antibacterial glass composition without changing an existing filter manufacturing process.

Furthermore, a purpose of the present disclosure is to provide a novel antibacterial filter applied to home appliances such as air conditioners, humidifiers, or air purifiers so as to suppress the growth of bacteria therein, thereby improving the hygiene of air.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims and combinations thereof.

### TECHNICAL SOLUTIONS

The resin composition for an antibacterial filter according to the present disclosure includes an antibacterial glass composition and a resin for a filter. In particular, components of the antibacterial glass composition and contents thereof may be controlled such that not only the antibacterial activity is enhanced, but also the properties of the resin are improved.

More specifically, the resin composition for the antibacterial filter according to the present disclosure includes an antibacterial glass composition; and a resin for a filter including a polymer material, wherein the antibacterial glass composition includes: antibacterial glass powders; and a silane coupling agent having a cationic functional group, wherein the antibacterial glass powders contain: 26 to 50 wt% of $SiO_2$; 0.5 to 4 wt% of at least one of $B_2O_3$ and $P_2O_5$; 15 to 27 wt% of both of $Na_2O$ and $K_2O$; 3 to 20 wt% of at least one of CaO, MgO, and $WO_3$; and 22 to 44 wt% of at least one of ZnO and SnO,

based on 100 wt% of the antibacterial glass powders.

In the antibacterial glass composition according to the present disclosure, the antibacterial activity is not exhibited as the antibacterial agent decomposes. Rather, the antibacterial glass composition has a mechanism in which metal ions having the antibacterial activity allow surface charges of the glass to be positively charged which attract bacteria having negative charges, thereby preventing the bacteria from growing, so that the semi-permanent antibacterial activity may be secured.

As a result, when the antibacterial glass composition of the present disclosure is utilized as an additive for plastic injection molding, the antibacterial glass composition may not only have excellent antibacterial activity against Escherichia coli and Staphylococcus aureus, but also effectively remove Pseudomonas aeruginosa as a major pathogen in a humid environment where water exists.

In addition, the resin composition for the antibacterial filter of the present disclosure prevents a decrease in the elongation of the yarn using the resin and suppresses a decrease in the production yield by controlling the components of the antibacterial agent and contents thereof in the antibacterial glass composition.

Furthermore, the preparing method of the present disclosure includes a process of preparing the antibacterial glass composition and mixing the antibacterial glass composition with the resin for the filter. The preparing method of the present disclosure may prepare the resin composition for the antibacterial filter with excellent physical properties and antibacterial activity using a simple process as described above.

Furthermore, the antibacterial filter of the present disclosure includes a yarn using a resin composition for an antibacterial filter, and the yarns are woven into a mesh form.

## TECHNICAL EFFECTS

The resin composition for the antibacterial filter according to the present disclosure may improve the hygiene of air by suppressing the growth of bacteria in the filter applied to home appliances such as an air conditioner, a humidifier, or an air purifier.

In particular, the resin composition for the antibacterial filter of the present disclosure may prevent a decrease in the elongation of a yarn using a resin and suppress a decrease in the production yield by controlling the components of the antibacterial agent and the contents thereof.

In addition, the antibacterial glass composition applied to the present disclosure includes $SiO_2$ as a glass former as a main component. Thus, the metal ion having the antibacterial property added to the glass causes the surface charge (zeta potential) of the glass to be positive. Thus, the positive charge may attract the bacteria that normally have a negative charge to create a charge atmosphere in which bacteria cannot grow, thereby killing the bacteria.

As a result, the antibacterial filter of the present disclosure may not only have excellent antibacterial activity against E. coli and Staphylococcus aureus, but also effectively remove Pseudomonas aeruginosa as a major pathogen in a humid environment where water exists.

In addition, the antibacterial filter according to the present disclosure has high thermal stability and long-lasting properties, while complementing the slow antibacterial instantaneous effect as a disadvantage of the inorganic antibacterial agent.

In addition to the effects as described above, specific effects of the present disclosure are described together with the specific details for carrying out the disclosure below.

## BRIEF DESCRIPTION OF DRAWINGS

FIG. 1 is a schematic drawing of a portion of an antibacterial filter according to an embodiment of the present disclosure.

FIG. 2 and FIG. 3 are SEM photographs showing an antibacterial filter according to an embodiment of the present disclosure.

## DETAILED DESCRIPTIONS

The above-mentioned purposes, features, and advantages will be described in detail later with reference to the attached drawings, so that those skilled in the art in the technical field to which the present disclosure belongs may easily practice the technical ideas of the present disclosure. In describing the present disclosure, when it is determined that a detailed description of the publicly known technology related to the present disclosure may unnecessarily obscure the gist of the present disclosure, the detailed description thereof will be omitted. Hereinafter, a preferred embodiment according to

the present disclosure will be described in detail with reference to the attached drawings. In the drawings, identical reference numerals are used to indicate identical or similar components.

As used herein, singular expressions include plural expressions, unless the context clearly dictates otherwise. In the present application, terms such as "composed of" or "include" should not be construed as necessarily including all of various components or steps described herein, and should be interpreted as being able to not including some of the components or the steps and further including additional components or steps.

Hereinafter, a resin composition for an antibacterial filter according to some embodiments of the present disclosure, a method for preparing the same, and an antibacterial filter using the resin composition will be described.

<Resin composition for antibacterial filter>

An antibacterial glass composition applied to the resin composition for an antibacterial filter of the present disclosure has secured semi-permanent sustainability of the antibacterial activity by controlling components of the antibacterial glass composition and contents thereof so as to have non-dissolution property.

Furthermore, the antibacterial glass composition may be composed of components harmless to the human body and has high heat resistance and high water resistance, and thus may maintain the antibacterial function semi-permanently.

In addition, in the antibacterial glass composition, the antibacterial activity is not exhibited as the antibacterial agent decomposes. Rather, the antibacterial glass composition has a mechanism in which metal ions having the antibacterial activity allow surface charges of the glass to be positively charged which attract bacteria having negative charges, thereby preventing the bacteria from growing, so that the semi-permanent antibacterial activity may be secured.

As a result, when the antibacterial glass composition is utilized as an additive for an antibacterial filter, the antibacterial glass composition may not only have excellent antibacterial activity against Escherichia coli and Staphylococcus aureus, but also effectively remove Pseudomonas aeruginosa as a major pathogen in a humid environment where water exists.

In addition, since the antibacterial glass composition has a form in which the above-described inorganic antibacterial glass and antibacterial organic substances bind to each other, the antibacterial glass composition has high thermal stability and long-lasting properties, while complementing the slow antibacterial instantaneous effect as a disadvantage of the inorganic antibacterial agent.

In addition, the resin composition for the antibacterial filter of the present disclosure prevents a decrease in the elongation of the yarn using the resin and suppresses a decrease in the production yield by controlling the components of the antibacterial agent and contents thereof in the antibacterial glass composition.

To this end, the resin composition for the antibacterial filter according to embodiments of the present disclosure includes an antibacterial glass composition; and a resin for a filter including a polymer material, wherein the antibacterial glass composition includes: antibacterial glass powders; and a silane coupling agent having a cationic functional group, wherein the antibacterial glass powders contain: 26 to 50 wt% of $SiO_2$; 0.5 to 4 wt% of at least one of $B_2O_3$ and $P_2O_5$; 15 to 27 wt% of both of $Na_2O$ and $K_2O$; 3 to 20 wt% of at least one of CaO, MgO, and $WO_3$; and 22 to 44 wt% of at least one of ZnO and SnO, based on 100 wt% of the antibacterial glass powders.

First, the antibacterial glass composition included in the resin composition for the antibacterial filter of the present disclosure is described.

In this regard, in order for the antibacterial glass composition to become glass, a glass former is essentially included therein. Furthermore, in order for the glass to be easily formed under a condition for melting the glass (approximately 900 to 1600°C), a modified oxide is included therein to melt the glass former in a homogeneous and amorphous form.

The most commonly commercially used glass formers are $SiO_2$, $B_2O_3$, and $P_2O_5$. The glass composed of a large amount of $B_2O_3$ and $P_2O_5$ has strong hygroscopicity, and a large amount of OH groups derived from moisture in the air are adsorbed on a surface thereof, resulting in a negative surface charge. This acts as a factor that inhibits the antibacterial activity of the glass.

Therefore, the present disclosure provides a novel silicate-based antibacterial glass composition that intentionally contains a smaller amount of of $B_2O_3$ and $P_2O_5$ and has $SiO_2$ as a glass former as a main component of the composition.

The antibacterial glass powders included in the antibacterial glass composition of the present disclosure contains 26 to 50 wt% of $SiO_2$, and 0.5 to 4 wt% of at least one of $B_2O_3$ and $P_2O_5$.

$SiO_2$ is a glass-former that enables vitrification and is a key component that plays a role in the structural framework of glass. Furthermore, $SiO_2$ does not act as a direct component that exerts the antibacterial power, but is advantageous in forming a smaller amount of OH groups on the glass surface, compared to $P_2O_5$ as a representative glass-former, thereby causing the glass surface to be positively charged due to metal ions in the glass.

The $SiO_2$ may be added at a content of 26 to 50 wt% based on 100 wt% of the antibacterial glass powders

according to the present disclosure. When $SiO_2$ is added in a large amount exceeding 50 wt%, the viscosity increases when the glass is melted, such that there is a problem that workability and yield are reduced during a cooling process. On the contrary, when $SiO_2$ is added in an amount smaller than 26 wt%, the structure of the glass is weakened, which causes a problem in that the water resistance is reduced.

On the other hand, the glass composed of a large amount of $B_2O_3$ and $P_2O_5$ has strong hygroscopicity, such that a lot of OH groups derived from moisture in the air are adsorbed on the surface of the glass, so that the surface charge becomes negative. This acts as a factor that inhibits the antibacterial activity of the glass. Therefore, according to the present disclosure, a novel antibacterial glass composition that has $B_2O_3$ and $P_2O_5$ at a minimum content and has $SiO_2$ as the glass former as the main component of the glass composition.

In other words, $SiO_2$ plays a role in strengthening the structure of the glass. However, when $SiO_2$ is used as a single component as a glass former, the viscosity becomes too high when being melted, so that a very high melting temperature is required to produce homogeneous glass. Therefore, a small amount of $B_2O_3$ and $P2O_5$ are added within a range in which the addition does not weaken the water resistance of the glass, such that the viscosity of the melt may be reduced, and the workability and yield of the glass production may be improved.

Accordingly, the antibacterial glass powders of the present disclosure contain 0.5 to 4 wt% of at least one of $B_2O_3$ and $P_2O_5$.

When at least one of $B_2O_3$ and $P_2O_5$ is added in a large amount exceeding 4 wt%, the water resistance of the glass may be reduced and $B_2O_3$ and $P_2O_5$ may easily be dissolved and released in water. Conversely, when at least one of $B_2O_3$ and $P_2O_5$ is added in an amount smaller than 0.5 wt%, the workability and yield of the glass production may be reduced.

Alkali oxides such as $Na_2O$ and $K_2O$ are oxides that act as a network modifier that forms a non-crosslinking bond in the glass composition. Each of these components alone cannot achieve vitrification. However, when each of these components is mixed with a glass former such as $SiO_2$ and $B_2O_3$ at a predetermined content, the vitrification becomes possible. When only one of the above components is included in the glass composition, the durability of the glass may be weakened within the vitrification possible range. However, when the two components are included in the glass composition together, the durability of the glass is improved again depending on the contents thereof. This is called the mixed alkali effect.

Therefore, $Na_2O$ and $K_2O$ are added in a content of 15 to 27 wt% based on 100 wt% of the antibacterial glass powders according to the present disclosure. When both of $Na_2O$ and $K_2O$ are added in a large amount exceeding 27 wt%, the thermal properties of the glass composition may be deteriorated. Conversely, when both of $Na_2O$ and $K_2O$ are added in a content smaller than 15 wt%, it is difficult to control the hydration of components such as ZnO, which may deteriorate the antibacterial properties.

Further, preferably, the content of $Na_2O$ and the content of $K_2O$ may satisfy the following relationship:

[Relationship]

$$0.5 \leq (\text{content of } Na_2O)/(\text{content of } K_2O) \leq 1.5$$

When the content of $Na_2O$ and the content of $K_2O$ do not satisfy the above relationship, the melting point lowering effect through the eutectic point may be reduced, thereby making it difficult to vitrify the antibacterial glass composition.

Next, the antibacterial glass powders of the present disclosure contain 3 to 20 wt% of at least one of CaO, MgO, and $WO_3$, based on 100 wt% of the antibacterial glass powders.

At least one of CaO, MgO, and $WO_3$ are oxides that act as a network modifier that forms a non-crosslinking bond in the glass composition in a similar manner to alkali oxides. When one or more of CaO, MgO, and $WO_3$ is added in an amount exceeding 20 wt%, the thermal properties of the glass composition may deteriorate. On the contrary, when one or more of CaO, MgO, and $WO_3$ is added in an amount smaller than 3 wt%, the glass structure may be weakened, resulting in reduced durability and reduced antibacterial performance.

Next, the antibacterial glass powders of the present disclosure contain at least one of ZnO and SnO as a component that exhibits antibacterial performance.

At least one of ZnO and SnO is included in an amount of 22 to 44 wt% based on 100 wt% of the antibacterial glass powders according to the present disclosure. When at least one of ZnO and SnO is added in an amount smaller than 22 wt%, it is difficult to exhibit antibacterial properties of the glass composition. On the contrary, when at least one of ZnO and SnO is added in an amount exceeding 44 wt%, the durability or thermal properties of the glass composition may deteriorate. Preferably, the ZnO may be added in an amount of 30 wt% or larger, based on 100 wt% of the antibacterial glass powders according to the present disclosure.

In particular, according to the present disclosure, the antibacterial glass powers include at least one of ZnO and SnO in an amount of 22 to 44 wt% compared to other components, thereby preventing a decrease in the elongation of the yarn and a decrease in the production yield of the yarn. At least one of the ZnO and SnO exhibits antibacterial performance, but chemically reacts with the resin for the filter to reduce the elongation of the yarn. Accordingly, the antibacterial agent included in the resin composition for the antibacterial filter needs to control the type and the content of the antibacterial component. According to the present disclosure, the contents of the other components and at least one of the ZnO and SnO may be controlled such that the reduction in the elongation of the yarn may be prevented.

Furthermore, a conventional antibacterial composition includes various antibacterial components such as Ag and Ag oxide to exhibit antibacterial activity (coverage against various bacteria). However, the injection molded product to which the Ag component has been applied exhibits color change when being exposed to light for a long period of time. Thus, the composition according to the present disclosure exhibits the antibacterial activity using Zn and Sn without including Ag and Ag oxide, thereby suppressing the above-mentioned side effect. Preferably, the antimicrobial glass composition of the present disclosure does not contain Ag, Ag oxide. However, the antimicrobial glass composition of the present disclosure may contain $Ag_3PO_4$ or $AgNO_3$ at 0.1 wt% or smaller based on 100 wt% of the antimicrobial glass powder, when necessary.

Next, the antimicrobial glass composition includes the silane coupling agent having the cationic functional group in addition to the antimicrobial glass powders as described above.

In this regard, the cationic functional group may include at least one selected from a quaternary ammonium salt, an imidazolium group, a piperidinium group, a morpholinium group, a pyridinium group, and a pyrrolidinium group.

In addition, the silane coupling agent may include at least one of γ-aminopropyl trimethoxysilane, γ-aminopropyl triethoxy silane, γ-glycidoxy propyl trimethoxy silane, γ-glycidoxy propyl trimethoxysilane, γ-mercapto propyl trimethoxy silane, γ-mercapto propyl triethoxy silane, and a silane coupling agent represented by a following Chemical Formula:

[Chemical Formula] $RO(CH_2CHO)_nCH_2CH_2CH_2CSi(OR')_3$

where R is a methyl group, an ethyl group, or hydrogen, R' is a methyl group or an ethyl group, and n is an integer from 1 to 10.

In this way, the resin composition for the antibacterial filter according to the present disclosure includes the antimicrobial glass powders as the inorganic antimicrobial agent, and further includes the silane coupling agent having the cationic functional group to maximize the performance of the antimicrobial glass powders. More specifically, the silane coupling agent having the cationic functional group binds to the surface of the antimicrobial glass powder. The cationic functional group interacts with the cell membrane of the negatively charged bacteria to exhibit antimicrobial properties. In addition, when the antimicrobial glass composition of the present disclosure is applied to a polymer, this may advantageously improve the mechanical properties and dispersibility of the polymer. The silane coupling agent is used as an intermediate connecting the antibacterial inorganic material (the glass powders) and the organic material (the cationic functional group) to each other.

The silane coupling agent having the cationic functional group may preferably be contained in an amount of 0.1 to 20 parts by weight, most preferably in an amount of 0.1 to 5 parts by weight, based on 100 parts by weight of the antibacterial glass powders.

In this regard, the resin composition for the antibacterial filter of the present disclosure may include 1 to 20 parts by weight of the above-described antibacterial glass composition based on 100% by weight of the total weight of the resin composition for the antibacterial filter. When the content of the antibacterial glass composition is smaller than 1% by weight based on 100% by weight of the total weight of the resin composition for the antibacterial filter, the required antibacterial property may not be realized. On the contrary, when the content of the antibacterial glass composition exceeds 20% by weight, the durability or elongation of the filter may be reduced,

Next, the resin for the filter included in the resin composition for the antibacterial filter of the present disclosure will be described.

The resin for the filter is not particularly limited as long as it is a polymer material that may be used as a material for an antibacterial filter. Preferably, the resin for the filter may include at least one of polypropylene, polycarbonate, HIPS (high-impact polystyrene), ABS (acrylonitrile-butadiene-styrene) copolymer, and EPDM (ethylene-propylene-diene monomer) copolymer.

<Method for preparing resin composition for antibacterial filter>

Next, a method for preparing a resin composition for an antibacterial filter according to an embodiment of the present disclosure will be described.

The method for preparing the resin composition for an antibacterial filter according to an embodiment of the present disclosure first includes a process for preparing an antibacterial glass composition. The process for preparing the

antibacterial glass composition includes a mixing step, a melting step, a cooling step, and a pulverizing step.

Mixing

In the mixing step, first, the antibacterial glass powders is prepared, wherein the antibacterial glass powders contain: 26 to 50 wt% of $SiO_2$; 0.5 to 4 wt% of at least one of $B_2O_3$ and $P_2O_5$; 15 to 27 wt% of both of $Na_2O$ and $K_2O$; 3 to 20 wt% of at least one of CaO, MgO, and $WO_3$; and 22 to 44 wt% of at least one of ZnO and SnO, based on 100 wt% of the antibacterial glass powders.
The preferred composition ratio of the antibacterial glass powders is as described above.

Melting

In the melting step, the antibacterial glass powders are melted.
In this step, it is preferable that the melting is performed at 1,100 to 1,400°C for 1 to 60 minutes. When the melting temperature is smaller than 1,200°C or the melting time is smaller than 1 minute, the antibacterial glass powders are not completely dissolved, which causes the glass melt to become immiscible. On the contrary, when the melting temperature exceeds 1,300°C or the melting time exceeds 60 minutes, it is not economical because excessive energy and time are required.

Cooling

In the cooling step, the molten antibacterial glass powders are cooled down to room temperature.
In this step, it is preferable that the cooling is performed in a furnace. When air cooling or water cooling is applied, the internal stress of the antibacterial glass is excessive generated, which may cause cracks in some cases. For this reason, the cooling in the furnace is preferable.

Pulverizing

In the pulverizing step, the cooled antibacterial glass is pulverized. At this time, it is preferable to use a dry pulverizing means for the pulverizing process. For example, a ball mill process or a jet mill process may be used using the dry pulverizing means. In this pulverizing process, the silane coupling agent having the cationic functional group is added to the antibacterial glass powders.
Via the above-described pulverizing, the antibacterial glass is finely pulverized to particles, such that the antibacterial glass composition including the antibacterial glass powders and the silane coupling agent having the cationic functional group is prepared. It is preferable that the antibacterial glass composition has an average diameter of 30 $\mu$m or smaller. A more preferable range of the average diameter thereof is in a range of 15 to 25 $\mu$m.
The antibacterial glass composition according to an embodiment of the present disclosure may be prepared in the above process.
Next, the antibacterial glass composition and the resin for the filter may be mixed with each other such that the resin composition for the antibacterial filter of the present disclosure may be prepared.
A preferred content of the antibacterial glass composition and a preferred examples of the resin for the filter are as described above.

<Antibacterial filter>

Next, the antibacterial filter of the present disclosure is described.
Referring to FIG. 1, an antibacterial filter 10 of the present disclosure includes yarns F made of the resin composition for the antibacterial filter obtained by the above-described preparation method, in which the yarns F are woven into a mesh form to manufacture the antibacterial filter.
The yarn F included in the antibacterial filter 10 of the present disclosure may have a diameter of 100 to 150 $\mu$m. The antibacterial glass particles AG having an average particle diameter of 3 to 5 $\mu$m may be dispersed in the yarn F. In this regard, the average particle diameter means an average value of the particle diameters of at least 10 or more antibacterial glass particles AG.

Examples

Hereinafter, the configuration and the effect of the present disclosure will be described in more detail based on a preferred example of the present disclosure. However, this is presented as a preferred implementation of the present

disclosure and cannot be interpreted as limiting the present disclosure in any way.

Since the contents not described here may be sufficiently technically inferred by a person skilled in the art, the description thereof will be omitted.

**1. Preparing a resin composition for an antibacterial filter**

The antibacterial glass composition having the composition described in Table 1 was melted in an electric furnace at a temperature of 1,250°C, and then a quenching twin roll was used to cool the melted antibacterial glass composition to obtain a cullet having a thickness of 1 mm or smaller.

In this regard, the raw materials of $Na_2O$, $K_2O$, and CaO were $Na_2CO_3$, $K_2CO_3$, and $CaCO_3$, respectively, and the remaining components were the same as those described in Table 1. Vitrification was classified into a case where the glassy state is homogeneous and a case where opalescence/unmelted substance occurs.

The prepared glass was ground with a dry pulverizing means (ball mill or jet mill) to prepare powders with an average particle size of 3 to 6 $\mu$m.

Next, the silane coupling agent with the cationic functional group was prepared.

For synthesis with the cationic functional group, 3-chloropropyltrimethoxysilane was used as the silane coupling agent. In order to synthesize imidazolium with the silane coupling agent, the synthesis was performed at a molar ratio of 1:1.2 at 130°C for 24 hours in a toluene atmosphere, and a following substance was prepared.

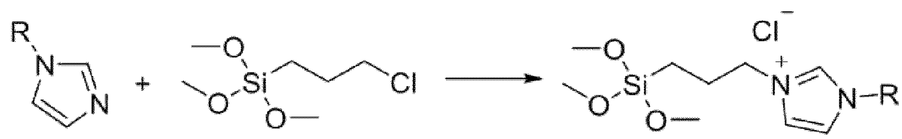

Next, for the synthesis of quaternary ammonium salt and silane coupling agent, 3-chloropropyltrimethoxysilane and dimethyl butyl amine were synthesized with each other at a molar ratio of 1:0.909 in an atmosphere of 90°C for 24 hours to prepare a following substance:

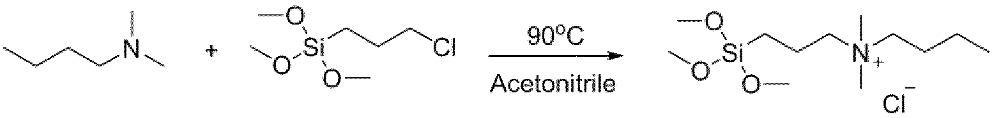


Thereafter, the antibacterial glass powders prepared as above and the silane coupling agent having the cationic functional group were synthesized with each other.

The antibacterial glass powders and the silane coupling agent having the cationic functional group were pulverized and mixed with each other for a long time, and then the mixture was heat-treated at 120°C for 24 hours to physically and chemically bond the antibacterial glass powders and the silane coupling agent having the cationic functional group to each other.

The resin for the filter including polypropylene was prepared as a main resin, and then, 10 wt% of the antibacterial glass composition and 90 wt% of the resin for the filter were mixed with each other to prepare the resin composition for the filter.

Table 2 as set forth below shows whether vitrification is achieved, and the content of the silane coupling agent in Present Example and Comparative Example. Present Examples 1 and 2 employed the silane coupling agent using imidazolium, and Present Examples 3 and 4 and Comparative Example 2 employed the silane coupling agent using quaternary ammonium salt.

[Table 1]

| Components | Present Example 1 | Comparative Example 1 |
|---|---|---|
| $SiO_2$ | 35.1 | 53 |
| $P2O_5$ | 0 | 4 |
| $B_2O_3$ | 2 | 0 |
| $Na_2O$ | 9.6 | 15 |
| $K_2O$ | 9.6 | 0 |
| $WO_3$ | 0 | 0 |

(continued)

| Components | Present Example 1 | Comparative Example 1 |
|---|---|---|
| CaO | 4.3 | 18 |
| MgO | 0 | 0 |
| SnO | 0 | 0 |
| ZnO | 39.4 | 10 |
| Total | 100 | 100 |

(Unit: wt%)

[Table 2]

| Examples | Present Example 1 | Comparative Example 1 |
|---|---|---|
| Whether vitrification is achieved? | O | O |
| Silane coupling agent with cationic functional group (relative to a weight of antibacterial glass powders) | 0.1 | 0.1 |
| Content of antibacterial glass in resin composition (wt%) | 1.5 | 1.5 |

Furthermore, a composition according to Comparative Example 2 was prepared by mixing a commercially available ZnO-based antibacterial agent with the resin for the filter. Comparative Example 2 contained 1.5 wt% of the antibacterial agent.

**2. Manufacturing antibacterial filter**

The resin composition for the antibacterial filter prepared as above was converted into pellets using extrusion and injection molding, and the pellets were put into a spinning machine for a filter to spin and draw the pellets to produce yarns.

The manufactured yarns were woven into a 30 to 40 mesh form by crossing the yarns each other in a perpendicular manner with each other using a weaving machine. Thereafter, the mesh woven into a fabric form was subjected to insert injection molding and then, was combined with a frame to manufacture a filter.

**3. Evaluation of antibacterial filter**

(1) Antibacterial filter structure

Referring to FIG. 2 and FIG. 3, SEM images of the filter prepared from Present Example 1 of the present disclosure are shown. It may be identified that the antibacterial glass particles are densely disposed in the yarn of the filter according to Present Example of the present disclosure.

(2) Property evaluation

A tensile test was conducted on the filter according to Present Example 1. When a force of 3.5 kgf was applied thereto using a push-pull gauge, the filter according to Present Example 1 did not have mesh tearing.

(3) Antibacterial test evaluation

Next, the antibacterial activity value of each filter against each of Staphylococcus aureus and Escherichia coli was identified according to the antibacterial standard test (ISO 20743, fiber antibacterial test method).

[Table 3]

| Examples | | Present Example 1 | Comparative Example 1 | Comparative Example 2 |
|---|---|---|---|---|
| ISO 20743 (FITI Testing & Research Institute) | Staphylococcus aureus | 99.999 | 90.00 | 90.00 |
| | Escherichia coli | 99.999 | 90.00 | 90.00 |

As described in Table 3, it may be identified that the filter prepared according to Present Example has superior antibacterial activity compared to the specimen according to Comparative Example.

(4) Antibacterial activity life test

The antibacterial filter was exposed to washing liquid containing a neutral detergent for 17 hours (@40°C). Then, the antibacterial activity was evaluated.

Based on a comparing result of the antibacterial activity of the filter according to Present Example 1 and the antibacterial activity of the filter according to Comparative Example 2, the initial antibacterial performances of the two filters were similar to each other. However, the filter according to Present Example 1 after water immersion exhibited superior antibacterial activity. This may indicate that the durability of the antibacterial filter having the antibacterial glass of the present disclosure applied thereto is excellent in the aging environment of the filter.

[Table 4]

| Examples | Antibacterial activity value (log) (Staphylococcus aureus) | | Remark |
|---|---|---|---|
| | 0hr | 17hr | |
| Comparative Example 2 | 5.8 | 2.4 | ISO 20743 (FITI Testing & Research Institute) |
| Present Example 1 | 5.8 | 3.5 | |

(5) Filter yarn spinning test and antibacterial activity life test

The spinning production test of a prefilter yarn of each of Present Example 1 and Comparative Example 2 was conducted. The number of holes in the spinneret nozzle is 120. In Present Example 1, no problems such as nozzle clogging occurred.

However, the ZnO-based antibacterial agent caused resin hardening due to a chemical reaction with the resin for the filter, and thus the existing quantity of yarns could not be spun. This problem not only reduces the production yield but also reduces the production amount.

Although the present disclosure has been described with reference to the accompanying drawings, the present disclosure is not limited by the embodiments disclosed herein and the drawings, and it is obvious that various modifications may be made by those skilled in the art within the scope of the technical idea of the present disclosure. In addition, although the effects based on the configuration of the present disclosure are not explicitly described and illustrated in the description of the embodiment of the present disclosure above, it is natural that predictable effects from the configuration should also be recognized.

## Claims

**1.** A resin composition for an antibacterial filter, the resin composition comprising:

an antibacterial glass composition; and
a resin for a filter including a polymer material,
wherein the antibacterial glass composition includes:

antibacterial glass powders; and
a silane coupling agent having a cationic functional group,

wherein the antibacterial glass powders contain:

26 to 50 wt% of $SiO_2$;
0.5 to 4 wt% of at least one of $B_2O_3$ and $P_2O_5$;
15 to 27 wt% of both of $Na_2O$ and $K_2O$;
3 to 20 wt% of at least one of CaO, MgO, and $WO_3$; and
22 to 44 wt% of at least one of ZnO and SnO,
based on 100 wt% of the antibacterial glass powders.

**2.** The resin composition for the antibacterial filter of claim 1, wherein a content of the $Na_2O$ and a content of the $K_2O$ satisfy a following relationship:

[Relationship]

$$0.5 \leq (\text{content of } Na_2O)/(\text{content of } K_2O) \leq 1.5$$

**3.** The resin composition for the antibacterial filter of claim 1, wherein the antibacterial glass powders further contain Ag or an oxide including Ag at a content of 0.1 wt% or smaller, based on 100 wt% of the antibacterial glass powders.

**4.** The resin composition for the antibacterial filter of claim 1, wherein the antibacterial glass powders contain the ZnO at a content of 30 wt% or larger, based on 100 wt% of the antibacterial glass powders.

**5.** The resin composition for the antibacterial filter of claim 1, wherein the cationic functional group includes at least one selected from a quaternary ammonium salt, an imidazolium group, a piperidinium group, a morpholinium group, a pyridinium group, and a pyrrolidinium group,
wherein the silane coupling agent includes at least one selected from γ-aminopropyl trimethoxysilane, γ-aminopropyl triethoxy silane, γ-glycidoxy propyl trimethoxy silane, γ-glycidoxy propyl trimethoxysilane, γ-mercapto propyl trimethoxy silane, γ-mercapto propyl triethoxy silane, and a silane coupling agent represented by a following Chemical Formula:

[Chemical Formula] $RO(CH_2CHO)_nCH_2CH_2CH_2CSi(OR')_3$

where R is a methyl group, an ethyl group, or hydrogen, R' is a methyl group or an ethyl group, and n is an integer from 1 to 10.

**6.** The resin composition for the antibacterial filter of claim 1, wherein the antibacterial glass composition contains the silane coupling agent having the cationic functional group at a content of 0.1 to 20 parts by weight, based on 100 parts by weight of the antibacterial glass powders.

**7.** The resin composition for the antibacterial filter of claim 1, wherein the resin for the filter includes at least one of polypropylene, polycarbonate, HIPS (high-impact polystyrene), ABS (acrylonitrile-butadiene-styrene) copolymer, and EPDM (ethylene-propylene-diene monomer) copolymer.

**8.** The resin composition for the antibacterial filter of claim 1, wherein the resin composition for the antibacterial filter contains the antibacterial glass composition at a content of 1 to 20 wt% based on 100 wt% of a total weight of the resin composition for the antibacterial filter.

**9.** A method for preparing a resin composition for an antibacterial filter, the method comprising:

preparing antibacterial glass powders such that the antibacterial glass powders contain:

26 to 50 wt% of $SiO_2$;
0.5 to 4 wt% of at least one of $B_2O_3$ and $P_2O_5$;
15 to 27 wt% of both of $Na_2O$ and $K_2O$;
3 to 20 wt% of at least one of CaO, MgO, and $WO_3$; and
22 to 44 wt% of at least one of ZnO and SnO,
based on 100 wt% of the antibacterial glass powders;

melting the antibacterial glass powders;

cooling the melted antibacterial glass powders;
adding a silane coupling agent having a cationic functional group to the cooled antibacterial glass powders, and pulverizing the cooled antibacterial glass powders to prepare an antibacterial glass composition; and
mixing the prepared antibacterial glass composition with a resin for a filter.

**10.** The method for preparing the resin composition for the antibacterial filter of claim 9, wherein a content of the NazO and a content of the $K_2O$ satisfy a following relationship:

[Relationship]

$$0.5 \leq (\text{content of } Na_2O)/(\text{content of } K_2O) \leq 1.5$$

**11.** The method for preparing the resin composition for the antibacterial filter of claim 9, wherein the antibacterial glass powders further contain Ag or an oxide including Ag at a content of 0.1 wt% or smaller, based on 100 wt% of the antibacterial glass powders.

**12.** The method for preparing the resin composition for the antibacterial filter of claim 9, wherein the antibacterial glass powders contain the ZnO at a content of 30 wt% or larger, based on 100 wt% of the antibacterial glass powders.

**13.** The method for preparing the resin composition for the antibacterial filter of claim 9, wherein the cationic functional group includes at least one selected from a quaternary ammonium salt, an imidazolium group, a piperidinium group, a morpholinium group, a pyridinium group, and a pyrrolidinium group,
wherein the silane coupling agent includes at least one selected from γ-aminopropyl trimethoxysilane, γ-aminopropyl triethoxy silane, γ-glycidoxy propyl trimethoxy silane, γ-glycidoxy propyl trimethoxysilane, γ-mercapto propyl trimethoxy silane, γ-mercapto propyl triethoxy silane, and a silane coupling agent represented by a following Chemical Formula:

[Chemical Formula] $RO(CH_2CHO)_nCH_2CH_2CH_2CSi(OR')_3$

where R is a methyl group, an ethyl group, or hydrogen, R' is a methyl group or an ethyl group, and n is an integer from 1 to 10.

**14.** The method for preparing the resin composition for the antibacterial filter of claim 9, wherein the antibacterial glass composition contains the silane coupling agent having the cationic functional group at a content of 0.1 to 20 parts by weight, based on 100 parts by weight of the antibacterial glass powders.

**15.** The method for preparing the resin composition for the antibacterial filter of claim 9, wherein the resin for the filter includes at least one of polypropylene, polycarbonate, HIPS (high-impact polystyrene), ABS (acrylonitrile-butadiene-styrene) copolymer, and EPDM (ethylene-propylene-diene monomer) copolymer.

**16.** The method for preparing the resin composition for the antibacterial filter of claim 9, wherein the resin composition for the antibacterial filter contains the antibacterial glass composition at a content of 1 to 20 wt% based on 100 wt% of a total weight of the resin composition for the antibacterial filter.

**17.** An antibacterial filter comprising yarns made of the resin composition for the antibacterial filter prepared by the method of claim 9,
wherein the yarns are woven into a mesh shape to form the antibacterial filter.

**18.** The antibacterial filter of claim 17, wherein a diameter of the yarn is in a range of 100 to 150 μm,
wherein antibacterial glass particles having an average particle diameter of 3 to 5 μm are dispersed in the yarn.

FIG. 1.

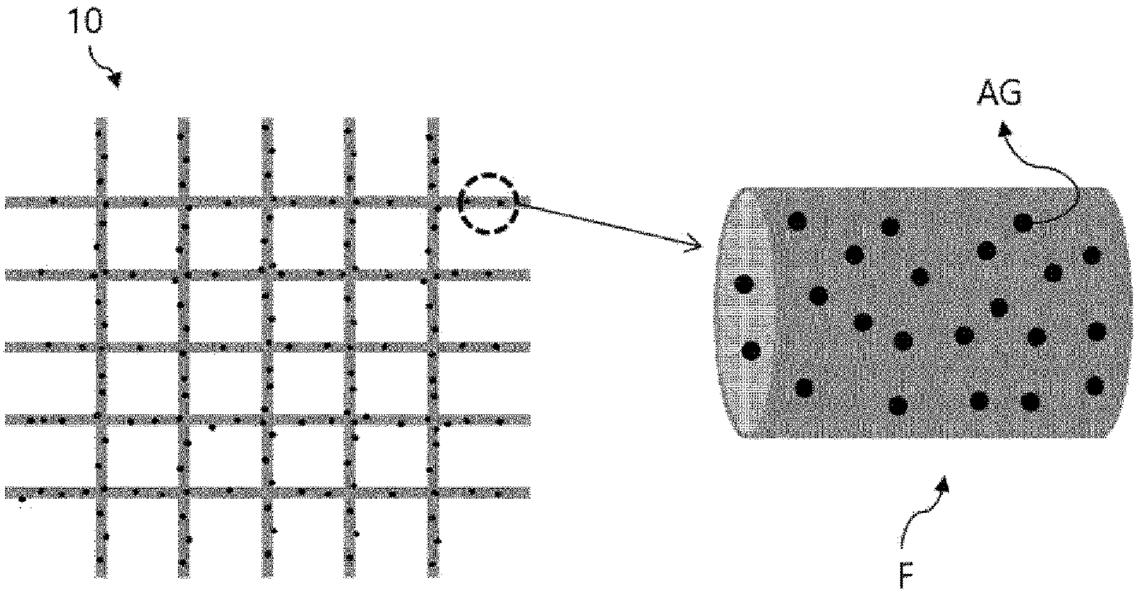

FIG. 2.

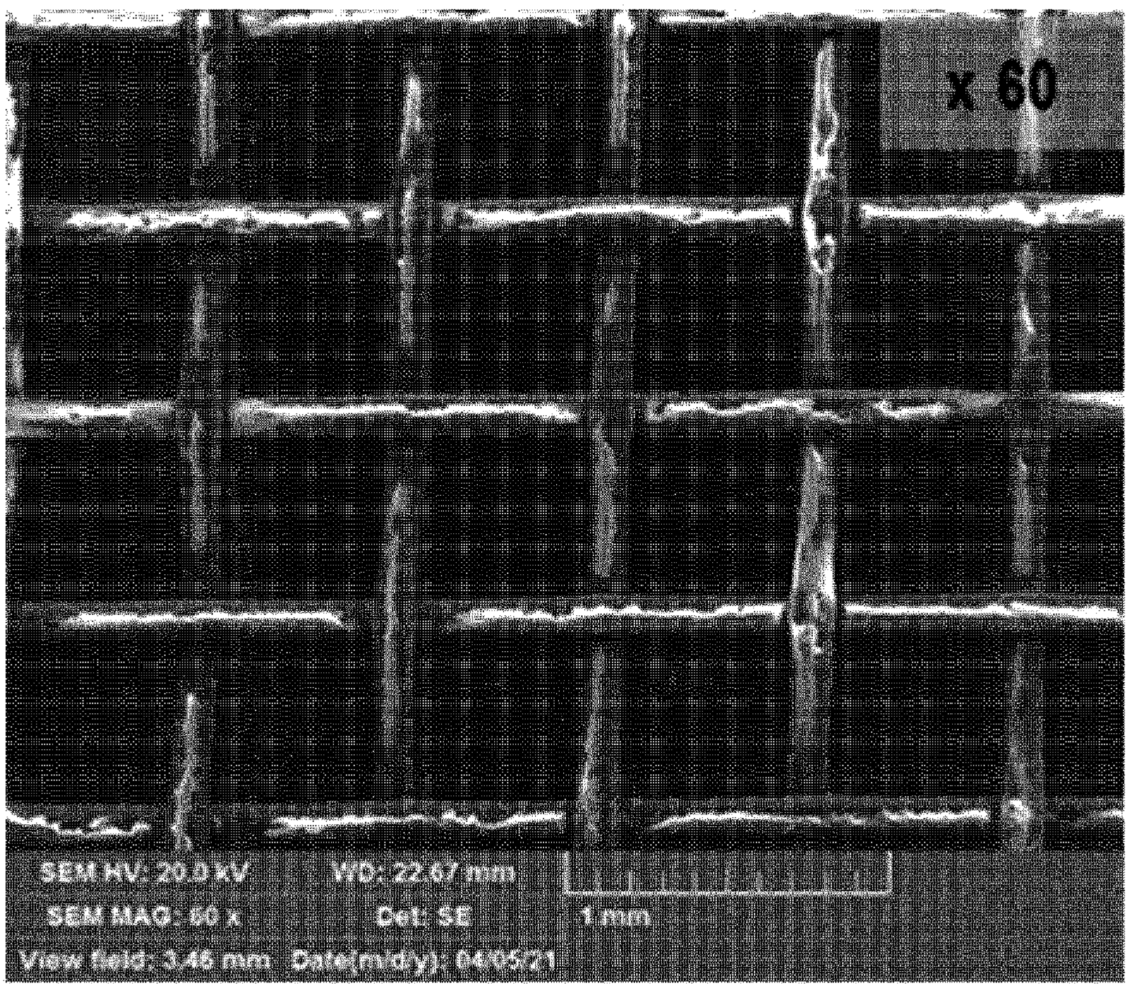
x 60
SEM HV: 20.0 kV
WD: 22.67 mm
SEM MAG: 60 x
Det: SE
1 mm
View field: 3.46 mm
Date(m/d/y): 04/05/21

FIG. 3.

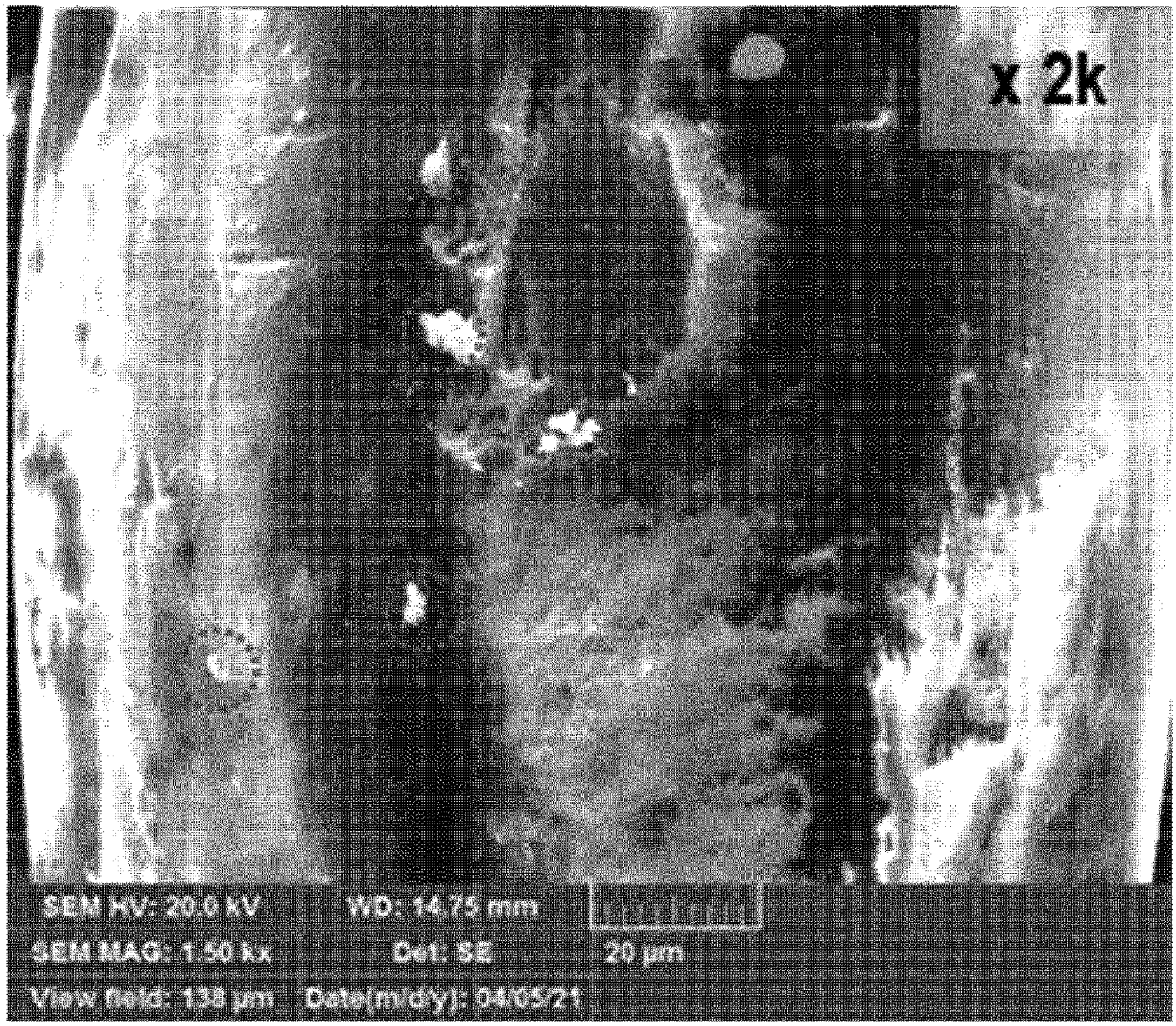
x 2k
SEM HV: 20.0 kV
WD: 14.75 mm
SEM MAG: 1.50 kx
Det: SE
20 μm
View field: 138 μm
Date(m/d/y): 04/05/21

**INTERNATIONAL SEARCH REPORT**

International application No. **PCT/KR2023/005086**

**A. CLASSIFICATION OF SUBJECT MATTER**

**B01D 39/14**(2006.01)i; **B01D 39/20**(2006.01)i; **B01D 39/16**(2006.01)i; **B01D 39/08**(2006.01)i

According to International Patent Classification (IPC) or to both national classification and IPC

**B. FIELDS SEARCHED**

Minimum documentation searched (classification system followed by classification symbols)

B01D 39/14(2006.01); A01N 25/34(2006.01); A01N 59/08(2006.01); A01N 59/16(2006.01); C03C 10/00(2006.01); C03C 3/083(2006.01); C03C 3/089(2006.01); C03C 4/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 항균(antimicrobial), 필터(filter), 레진(resin), 유리(glass)

**C. DOCUMENTS CONSIDERED TO BE RELEVANT**

| Category* | Citation of document, with indication, where appropriate, of the relevant passages | Relevant to claim No. |
|---|---|---|
| Y | US 2006-0142413 A1 (ZIMMER, J. et al.) 29 June 2006 (2006-06-29)<br>See claims 1 and 17; and table 1, E7. | 1-18 |
| Y | KR 10-2005-0094457 A (TOAGOSEI CO., LTD.) 27 September 2005 (2005-09-27)<br>See claim 5; and paragraphs [0039], [0043], [0045]-[0049], [0051]-[0052], [0060] and [0075]. | 1-18 |
| Y | YOSHINO, N. et al. Synthesis and antimicrobial activity of quaternary ammonium silane coupling agents. Journal of oleo science. 2011, vol. 60, no. 8, pp. 429-438.<br>See abstract. | 1-18 |
| A | KR 10-2016-0124193 A (CORNING INCORPORATED) 26 October 2016 (2016-10-26)<br>See entire document. | 1-18 |
| A | JP 07-257938 A (ISHIZUKA GLASS CO., LTD.) 09 October 1995 (1995-10-09)<br>See entire document. | 1-18 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 August 2023** | **07 August 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/005086**

| Patent document cited in search report | Publication date (day/month/year) | Patent family member(s) | Publication date (day/month/year) |
|---|---|---|---|
| US 2006-0142413 A1 | 29 June 2006 | AU 2003-216890 A1 | 13 October 2003 |
| | | CN 100503497 C | 24 June 2009 |
| | | CN 1751000 A | 22 March 2006 |
| | | CN 1753840 A | 29 March 2006 |
| | | CN 1774405 A | 17 May 2006 |
| | | DE 10214273 A1 | 23 October 2003 |
| | | DE 10308186 A1 | 09 September 2004 |
| | | DE 10308186 B4 | 04 January 2007 |
| | | DE 10308227 A1 | 09 September 2004 |
| | | DE 10341856 A1 | 31 March 2005 |
| | | DE 112004000094 A5 | 03 April 2008 |
| | | DE 112004000095 A5 | 03 July 2008 |
| | | EP 1597211 A2 | 23 November 2005 |
| | | JP 2006-518696 A | 17 August 2006 |
| | | JP 2006-518697 A | 17 August 2006 |
| | | JP 2006-520311 A | 07 September 2006 |
| | | JP 4602320 B2 | 22 December 2010 |
| | | US 2006-0166806 A1 | 27 July 2006 |
| | | US 2006-0172877 A1 | 03 August 2006 |
| | | US 8080490 B2 | 20 December 2011 |
| | | WO 03-082358 A1 | 09 October 2003 |
| | | WO 2004-076369 A2 | 10 September 2004 |
| | | WO 2004-076369 A3 | 31 March 2005 |
| | | WO 2004-076370 A1 | 10 September 2004 |
| | | WO 2004-076371 A2 | 10 September 2004 |
| | | WO 2004-076371 A3 | 28 April 2005 |
| KR 10-2005-0094457 A | 27 September 2005 | CN 1323588 C | 04 July 2007 |
| | | CN 1741742 A | 01 March 2006 |
| | | JP 2004-262763 A | 24 September 2004 |
| | | JP 4388282 B2 | 24 December 2009 |
| | | TW 200418741 A | 01 October 2004 |
| | | TW I325853 A | 11 June 2010 |
| | | TW I325853 B | 11 June 2010 |
| | | US 2006-0127498 A1 | 15 June 2006 |
| | | US 7514093 B2 | 07 April 2009 |
| | | WO 2004-064524 A1 | 05 August 2004 |
| KR 10-2016-0124193 A | 26 October 2016 | CN 106536435 A | 22 March 2017 |
| | | EP 3107874 A1 | 28 December 2016 |
| | | JP 2017-508705 A | 30 March 2017 |
| | | JP 2021-091603 A | 17 June 2021 |
| | | JP 6875855 B2 | 26 May 2021 |
| | | JP 7168704 B2 | 09 November 2022 |
| | | KR 10-2021-0128032 A | 25 October 2021 |
| | | KR 10-2022-0119508 A | 29 August 2022 |
| | | KR 10-2315415 B1 | 21 October 2021 |
| | | KR 10-2433330 B1 | 18 August 2022 |
| | | TW 201546011 A | 16 December 2015 |
| | | TW I704114 B | 11 September 2020 |
| | | US 11039619 B2 | 22 June 2021 |
| | | US 11039620 B2 | 22 June 2021 |

Form PCT/ISA/210 (patent family annex) (July 2022)

**INTERNATIONAL SEARCH REPORT**
**Information on patent family members**

International application No.
**PCT/KR2023/005086**

| Patent document cited in search report | Publication date (day/month/year) | Patent family member(s) | Publication date (day/month/year) |
|---|---|---|---|
| | | US 11039621 B2 | 22 June 2021 |
| | | US 11464232 B2 | 11 October 2022 |
| | | US 11470847 B2 | 18 October 2022 |
| | | US 2015-0230476 A1 | 20 August 2015 |
| | | US 2017-0172151 A1 | 22 June 2017 |
| | | US 2018-0317496 A1 | 08 November 2018 |
| | | US 2019-0373897 A1 | 12 December 2019 |
| | | US 2021-0267212 A1 | 02 September 2021 |
| | | US 2021-0267213 A1 | 02 September 2021 |
| | | US 2022-0240517 A1 | 04 August 2022 |
| | | US 2023-0000086 A1 | 05 January 2023 |
| | | US 2023-0008983 A1 | 12 January 2023 |
| | | US 9622483 B2 | 18 April 2017 |
| | | WO 2015-126806 A1 | 27 August 2015 |
| JP 07-257938 A | 09 October 1995 | JP 3159863 B2 | 23 April 2001 |

Form PCT/ISA/210 (patent family annex) (July 2022)